# EUROPÄISCHE PATENTANMELDUNG

(11) **EP 1 715 262 A2**
(43) Veröffentlichungstag der Anmeldung: **25.10.2006**
(21) Anmeldenummer: 06002631.7
(22) Anmeldetag: 09.02.2006
(51) Int. Cl.: F25B 9/00, F25B 49/00, F25B 41/06, F25B 41/04

(54) **Überdrucksicherheitseinrichtung für einen Kältemittelkreislauf**

(30) Priorität: 18.04.2005 DE 102005017918
(71) Anmelder: Behr GmbH & Co. KG, 70469 Stuttgart (DE)
(72) Erfinder: Gerken, Thomas, Dipl.-Ing., 70499 Stuttgart (DE); Sickelmann, Michael, Dipl.-Ing., 70806 Kornwestheim (DE); Tscheppe, Thomas, Dipl.-Ing., 76461 Muggensturm (DE)
(74) Vertreter: Nestler, Jan Hendrik

(57) **Zusammenfassung**

Für einen Kältemittelkreislauf (1), welcher CO₂ als Kältemittel verwendet, wird vorgeschlagen, auf der Niederdruckseite (13) des Kältemittelkreislaufs zwischen Expansionsventil (6) und Verdampfer (8) eine Überdrucksicfterheitsvorrichtung (16) anzuordnen. Das Überdruckventil (16) kann auch integral mit dem Expansionsventil und/oder dem Verdampfer (8) ausgebildet sein.

## Beschreibung

Die Erfindung betrifft eine Überdrucksicherheitsvorrichtung für einen Kältemittelkreislauf. Insbesondere betrifft die Erfindung eine Expansionsvorrichtung, eine Verdampfervorrichtung sowie eine Kältemittelkreislaufanordnung mit einer solchen Überdrucksicherheitsvorrichtung.

Bei Kältemaschinen, wie sie beispielsweise zur Klimatisierung von Gebäuden oder Fahrzeugen genutzt werden, wird Wärmeenergie an einem ersten Wärmeübertrager der Kälteanlage aufgenommen und zu einem zweiten Wärmeübertrager der Kälteanlage transportiert, wo diese Wärmeenergie wieder abgegeben wird. Auch wenn unterschiedliche physikalische Prinzipien für Kältemaschinen bekannt sind, so wird für die Klimatisierung von Gebäuden und Fahrzeugen fast ausschließlich das Kältemittelpumpenprinzip (bzw. das Prinzip der Kompressionskälteanlage) verwendet, bei dem die Abkühlung durch das Verdampfen eines Kältemittels bei einem niedrigen Druckniveau erfolgt und die anschließende Wärmeabgabe bei einem erhöhten Druckniveau - ggf. unter Kondensation des Kältemittels - erfolgt. Die Erniedrigung des Druckniveaus erfolgt in der Regel durch ein Expansionsorgan wie beispielsweise eine so genannte "Orifice Tube" oder ein ΔP-Ventil, während die Druckerhöhung durch einen Kompressor erfolgt.

Bei derartigen Kältemaschinen werden prinzipbedingt Kältemittel in gasförmigem und/oder flüssigem Zustand unter erhöhtem Druck in geschlossenen Systemen verwendet. Solche Systeme sind auf ein gewisses maximales Druckniveau ausgelegt, welches unter normalen Umständen während der Lebensdauer der Anlage nicht überschritten wird. Im Falle von unvorhersehbaren Störungen von Anlagenteilen (z. B. Verstopfungen) oder außergewöhnlichen äußeren Bedingungen (z. B. im Falle eines Unfalls oder extremer Umweltbedingungen) ist es denkbar, dass in Teilen der Kältemaschine das Druckniveau, auf das die Anlage ausgelegt ist, überschritten werden kann. Um in einem solchen Fall zu verhindern, dass Teile der Anlage beschädigt oder zerstört werden bzw. um ein unkontrolliertes Bersten von Anlagenteilen, was letztendlich auch zu Personenschäden führen kann, zu vermeiden, sind für einen solchen Ausnahmefall Sicherheitsvorrichtungen vorzusehen, die bei Überschreiten eines gewissen Überdrucks ansprechen und den Druck dadurch nicht über ein noch tolerables Maß hinaus ansteigen lassen.

Die Anforderungen an derartige Sicherheitsvorrichtungen sind bei einem Einsatz von CO₂ bzw. R744 als Kältemittel bei Klimageräten (wobei sich speziell R744 auch für eine Verwendung als Wärmepumpe zu Heizzwecken eignet) gestiegen, da das allgemeine Druckniveau im Kreislauf erheblich höher als beispielsweise bei R134a liegt. Typischerweise kommt es zu Drücken, die leicht im Bereich von 130 bar bis 150 bar liegen können.

Die Überdrucksicherheitsvorrichtungen werden dabei bislang auf der Hochdruckseite des Kältemittelkreislaufs angeordnet, da es hier funktionsbedingt zu den höchsten Drücken kommt.

Beim bereits erwähnten R744-Kältemittelkreislauf hat es sich nunmehr als sinnvoll erwiesen, Überdrucksicherheitsvorrichtungen auch auf der Niederdruckseite des Kältemittelkreislaufs vorzusehen. Dabei werden die Überdrucksicherheitsvorrichtungen bislang im Bereich des Kältemittelakkumulators vorgesehen, insbesondere da hier eine größere Menge an verflüssigtem Kältemittel vorhanden ist, welches nach einem Abstellen des Klimageräts verdampfen kann und zu einem dementsprechend erhöhten Stillstandsdruck führen kann. Inzwischen ist eine derartige Anordnung zum Teil auch unzulässig.

Bislang wird die niederdruckseitige Überdrucksicherheitsvorrichtung meist als gesondertes Bauteil im Kältemittelkreislauf eingebaut. Eine derartige Anordnung hat jedoch zum Nachteil, dass eine entsprechend erhöhte Anzahl an Verbindungsstellen zwischen Druckleitungen und Bauteilen vorzusehen ist. Derartige Verbindungen sind insbesondere bei R744-Kälteanlagen relativ aufwändig und teuer, da diese unter anderem auch hohe Drücke sicher abdichten müssen. Insbesondere erweist sich CO₂ in diesem Zusammenhang als problematisch, da bislang übliche Elastomermaterialien gegenüber CO₂ eine hohe Permeabilität aufweisen. Dadurch kommt es bei derartigen Verbindungsstellen zu unvermeidlichen Kältemittelleckagen, die bei üblichen Betriebszeiten der Anlage über mehrere Jahre hinweg durch einen entsprechenden Kältemittelpuffer und/oder kürzere Wartungsintervalle zur Nachbefüllung mit Kältemittel ausgeglichen werden müssen.

Aus diesem Grund wurde bereits vorgeschlagen, eine im Kältemittelakkumulator integrierte Überdrucksicherheitsvorrichtung auszubilden. Im Rahmen der vorliegenden Erfindung hat sich jedoch überraschenderweise gezeigt, dass der bauartbedingte maximale Niederdruck nicht im Bereich des Akkumulators auftritt. Dies kann dazu führen, dass es zu einer Schädigung von Komponenten der Klimaanlage kommt, bevor die Überdrucksicherheitsvorrichtung anspricht. Dies ist begreiflicherweise von Nachteil. Insbesondere kann dies dann auftreten, wenn beispielsweise alle Komponenten (wie z.B. Verdampfer, Kältemittelleitungen usw.) zwischen dem Austritt des Expansionsventils und dem Eintritt in den Akkumulator als Niederdruckkomponenten ausgelegt werden sollen.

Der Erfindung liegt daher die Aufgabe zugrunde, eine Überdrucksicherheitsvorrichtung vorzuschlagen, welche die bei bisherigen ÜberdruckSicherheitsvorrichtungen und/oder Klimaanlagen gemäß dem Stand der Technik immanenten Nachteile wenigstens zum Teil beseitigt oder zumindest mindert. Insbesondere besteht die Aufgabe der Erfindung darin, eine Expansionsvorrichtung für einen Kältemittelkreislauf, eine Verdampfervorrichtung für einen Kältemittelkreislauf bzw. eine Kältemittelkreislaufanordnung vorzuschlagen, die einfach und kostengünstig ist und die dennoch einen besonders großen Schutz der Komponenten eines Klimagerätes gegen eine Beschädigung durch einen übermäßigen Überdruck bietet.

Die vorgeschlagene Expansionsvorrichtung, die vorgeschlagene Verdampfervorrichtung, die vorgeschlagene Kältemittelkreislaufanordnung und/oder die vorgeschlagene Kältemittelanlage löst diese Aufgabe.

Dazu wird eine Expansionsvorrichtung für einen Kältemittelkreislauf mit wenigstens einem Expansionsorgan vorgeschlagen, welche zumindest eine integrierte Überdrucksicherheitsvorrichtung aufweist. Die Überdrucksicherheitsvorrichtung ist mithin integral mit der vorgeschlagenen Expansionsvorrichtung ausgebildet. Dadurch kann die Anzahl der vorzusehenden Verbindungsstellen im Kältemittelkreislauf reduziert werden, was den Aufwand, die Kosten sowie die Kältemittelverluste des mit einer derartigen Expansionsvorrichtung versehenen Kältemittelkreislaufs verringern kann.

Es hat sich als sinnvoll erwiesen, wenn die Überdrucksicherheitsvorrichtung niederdruckseitig angeordnet ist und bevorzugt mit zumindest einem Austrittskanal des Expansionsorgans in Verbindung steht. Auf diese Weise kann die Überdrucksicherheitsvorrichtung besonders nah - in Strömungsrichtung des Kältemittels gesehen - hinter einem Expansionsorgan vorgesehen werden. Der maximale Niederdruck tritt nämlich - insbesondere während des Betriebs der Kältemaschine - üblicherweise unmittelbar hinter dem Expansionsorgan tritt. Durch die vorgeschlagene Anordnung kann daher ein maximaler Schutz auch der Niederdruckseite mit der Kältemaschine gewährleistet werden. Besonders aus geometrischen Gründen ist es dabei besonders vorteilhaft, wenn die Überdrucksicherheitsvorrichtung zumindest mit einem Austrittskanal des Expansionsorgans in Verbindung steht. Es wird darauf hingewiesen, dass es bei Verwendung der vorgeschlagenen Lösung auch möglich ist, einen strömungstechnisch vollständig vom Hochdruckteil abgetrennten Niederdruckteil gegen einen unzulässigen Überdruck zu schützen. Dies kann beispielsweise auftreten, wenn das Klimagerät abgeschaltet wird. So kann ein solcher Fall insbesondere dann eintreten, wenn als Expansionsorgan ein Richtungsventil verwendet wird und der Kompressor sich in einer Stellung befindet, in der kein Kühlmittel durch ihn hindurch treten kann. In einem solchen Fall kann es insbesondere dann zu einer deutlichen Druckerhöhung im Niederdruckteil des Klimageräts kommen, wenn sich nach dem Abschalten des Klimageräts zunächst noch eine größere Menge an flüssigem Kältemittel in einem Akkumulator der Anlage befindet.

Weiterhin hat es sich als vorteilhaft erwiesen, wenn die Expansionsvorrichtung eine Gehäusung mit vier Anschlüssen aufweist, mit anderen Worten, wenn diese als 4-Port-Vorrichtung ausgebildet ist. Unter einer 4-Port-Vorrichtung ist hier insbesondere eine Vorrichtung zu verstehen, welche zwei Strömungskanäle aufweist, die strömungstechnisch im Wesentlichen voneinander getrennt sind. Insbesondere ist es möglich, die 4-Port-Vorrichtung integral mit einem weiteren Bauteil, wie insbesondere einem Verdampfer, zu kombinieren, so dass es möglich ist, die Anzahl der Verbindungsstellen weiter zu reduzieren. Es ist auch möglich, die 4-Port-Vorrichtung beispielsweise ohne Temperatursensor, welcher einen Einfluss auf das Expansionsorgan nimmt, auszubilden, ohne dass die genannten Vorteile wegfielen.

Möglich ist es, zumindest eine Überdrucksicherheitsvorrichtung als Einmaldruckablasseinrichtung, insbesondere als Berstplatte auszubilden. Eine derartige Überdrucksicherheitsvorrichtung ist besonders einfach in der Herstellung und kann darüber hinaus einen besonders großen Ablassquerschnitt zur Verfügung stellen.

Selbstverständlich ist es ebenso möglich - ggf. auch zusätzlich - zumindest eine Überdrucksicherheitsvorrichtung als Mehrfachdruckablasseinrichtung, insbesondere als federbelastete Ventileinrichtung, auszubilden. Bei einer derartigen Überdrucksicherheitsvorrichtung ist es nicht erforderlich, nach einem Ansprechen derselben diese auszutauschen, da diese Mehrfach ansprechen kann. Darüber hinaus ist es möglich, dass nur ein Teil des Kältemittels abgelassen wird, bis wieder tolerable Druckverhältnisse vorliegen. Dadurch kann es auch ausreichend sein, bei anschließenden Wartungsarbeiten nur eine kleinere Menge an Kältemittel nachzufüllen.

Wenn zumindest eine Gasableiteinrichtung zur Ableitung der von der Überdrucksicherheitsvorrichtung freigesetzten Gase ins Freie vorgesehen wird, kann auch im Falle eines Ansprechens der Überdrucksicherheitsvorrichtung gewährleistet werden, dass der Fahrzeuginnenraum und die sich darin befindlichen Personen nicht mit einer übermäßigen Menge bzw. gar nicht mit freigesetztem Kältemittel belastet werden. Dies ist beispielsweise im Fall von R744 als Kältemittel von Vorteil, da Kohlendioxyd je nach Konzentration ermüdend, giftig und sogar tödlich wirken kann.

Die Gasableiteinrichtung kann beispielsweise in Form einer geeigneten Abdichtung des Motorraums gegenüber dem Fahrgastraum erfolgen.

Als vorteilhaft erweist es sich jedoch, wenn zumindest eine Gasableiteinrichtung als Rohreinrichtung ausgebildet ist. Bei einer derartigen Ausbildung kann das freigesetzte Kältemittel auf einfache Weise zu einem geeigneten Ort hingeleitet werden. Als Rohreinrichtung sind selbstverständlich nicht nur starre Rohrleitungen, sondern auch flexible Schläuche, ggf. auch Wellschläuche, usw. zu verstehen.

Weiterhin wird eine Verdampfervorrichtung für einen Kältemittelkreislauf vorgeschlagen, welche zumindest eine integrierte Überdrucksicherheitsvorrichtung aufweist. Eine derartige Verdampfervorrichtung sowie deren ebenfalls vorgeschlagenen Weiterbildungen weisen die entsprechenden, im Zusammenhang mit der Expansionsvorrichtung erläuterten Vorteile in analoger Weise auf.

Wenn die Überdrucksicherheitsvorrichtung im Bereich der Kältemittelzuführung der Verdampfervorrichtung angeordnet ist, kann eine Nähe der Überdrucksicherheitsvorrichtung zum Expansionsorgan weitestgehend sichergestellt werden. Das ebenfalls vorgeschlagene, zumindest ein die Zuführleitung und die Abführleitung kombinierendes Anschlusselement, welches zumindest eine Überdrucksicherheitsvorrichtung und/oder eine Expansionsvorrichtung aufweist, kann ähnlich wie ein an sich bekanntes 4-Port-Expansionsventil ausgebildet sein. Jedoch ist es nicht notwendigerweise erforderlich, eine auf Druckdifferenzen, Durchflussmengen, Temperaturen bzw. Temperaturdifferenzen (vor allem zwischen Zufuhrleitung und Abführleitung gemessen) basierende Regelung, insbesondere eines Expansionsventils, vorzusehen.

Weiterhin wird eine Kältemittelkreislaufanordnung mit wenigstens einer Verdampfervorrichtung und wenigstens einer Expansionsvorrichtung mit wenigstens einem Expansionsorgan vorgeschlagen, bei der wenigstens eine Überdrucksicherheitsvorrichtung zwischen Expansionsorgan und Verdampfervorrichtung angeordnet ist. Eine derartige Anordnung der Überdrucksicherheitsvorrichtung, welche in aller Regel unmittelbar benachbart zum Expansionsorgan erfolgen kann, kann einen besonders hohen Schutz der Komponenten der Klimaanlage zur Verfügung stellen, da sich gezeigt hat, dass der insbesondere beim Betrieb der Anlage niederdruckseitig auftretende Maximaldruck üblicherweise unmittelbar nach dem Expansionsorgan auftritt.

Die vorgeschlagene Anordnung kann beispielsweise dadurch realisiert werden, dass eine Expansionsvorrichtung gemäß einer der oben vorgeschlagenen Ausbildungsmöglichkeiten und/oder eine Verdampfervorrichtung gemäß einer der vorab beschriebenen Ausbildungsmöglichkeiten verwendet wird.

Möglich ist es jedoch auch, dass - ggf. zusätzlich - eine separat ausgebildete Überdrucksicherheitsvorrichtung vorgesehen wird. Hierdurch ist es insbesondere möglich, gegebene Bauraumerfordemisse besonders günstig zu erfüllen. Vorzugsweise ist eine derartige separat ausgebildete Überdrucksicherheitsvorrichtung möglichst unmittelbar benachbart zum Expansionsorgan ausgebildet, um so eine möglichst große Schutzwirkung gewährleisten zu können.

Von Vorteil ist es auch, wenn die separat ausgebildete Überdrucksicherheitsvorrichtung als Rohrleitungsabschnitt dient, beispielsweise indem diese länglich ausgebildet ist.

Im Übrigen gilt auch für die vorgeschlagene Kältemittelkreislaufanordnung, dass die zum Teil bereits erwähnten Weiterbildungsmöglichkeiten auch für diese herangezogen werden können und die bereits beschriebenen Vorteile in analoger Form gewährleistet werden können.

Besonders vorteilhaft ist es, wenn bei einer Kältemittelanlage mit einer Expansionsvorrichtung, einer Verdampfervorrichtung und/oder einer Kältemittelkreislaufanordnung gemäß einer der vorab beschriebenen Ausbildungsmöglichkeiten R744 als Kältemittel genutzt wird. Insbesondere bei der Verwendung von R744 (Kohlendioxyd, CO₂) als Kältemittel erweist sich die vorliegende Erfindung als besonders geeignet und vorteilhaft.

Im Folgenden wird die Erfindung sowie die durch diese erzielbaren Vorteile unter Bezugnahme auf die beigefügten Figuren näher erläutert. Dabei zeigen:
- Figur 1: einen Kältemittelkreislauf mit zwei Überdruckventilen in schematischer Ansicht;
- Figur 2: eine als 2-Port-Organ ausgebildete Kombination aus Expansionsventil und Überdruckventil in schematischer Ansicht;
- Figur 3: eine als 4-Port-Organ ausgebildete Kombination aus Expansionsventil und Überdruckventil in schematischer Ansicht.

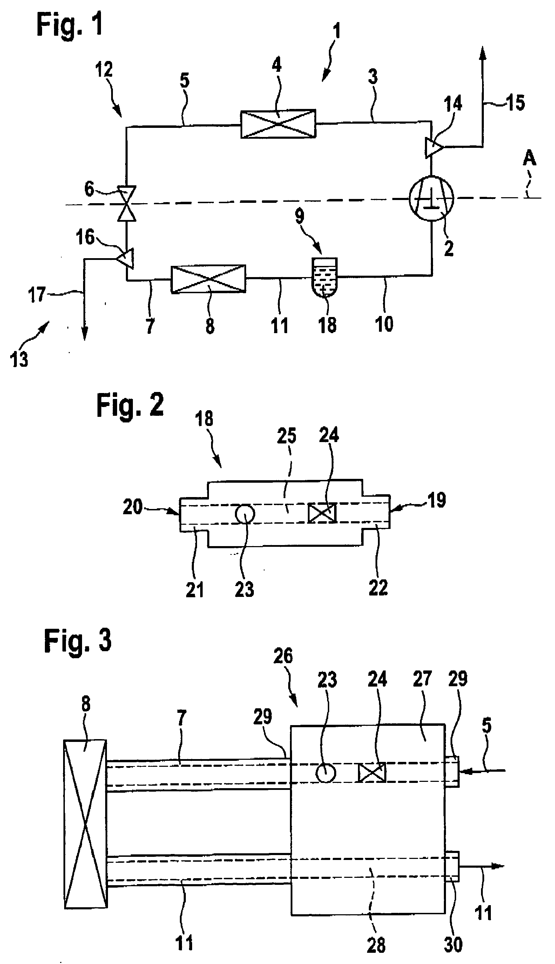

In Figur 1 ist ein Kältemittelkreislauf in schematischer Ansicht dargestellt, der im vorliegenden Fall R744 bzw. CO₂ als Kältemittel verwendet. Der Kältemittelkreislauf 1 weist in an sich bekannter Weise einen Kompressor 2, einen Gaskühler 4, ein Expansionsorgan 6, einen Verdampfer 8, einen Kältemittelakkumulator 9 sowie diverse Rohrleitungen 3, 5, 7, 10, 11, die diese Komponenten miteinander verbinden, auf. Selbstverständlich ist es auch möglich, einen hier nicht dargestellten inneren Wärmeübertrager vorzusehen.

Im Betrieb weist der Kältemittelkreislauf 1 einen hochdruckseitigen Teil 12 sowie einen niederdruckseitigen Teil 13 auf. Die Trennung in die beiden Teilbereiche ist in Figur 1 durch eine gestrichelte Linie A angedeutet.

Weiterhin verfügt der in Figur 1 skizzierte Kältemittelkreislauf 1 über ein Überdruckventil 14, welches unmittelbar hinter dem Kompressor 2 (in Strömungsrichtung des Kältemittels gesehen) in die den Kompressor 2 mit dem Gaskühler 4 verbindende Leitung 3 eingebaut ist. Bei Überschreiten eines vorab definierten Höchstdrucks von beispielsweise 150 oder 160 bar (wobei ggf. bauartbedingte Toleranzen von beispielsweise ± 10 bar auftreten können), öffnet das Überdruckventil 14 und lässt über eine Abführleitung 15 Kältemittel ins Freie strömen. Es ist dabei unerheblich, ob das Überdruckventil 14 beispielsweise als federbelastetes Ventil (Mehrfachventil) oder aber beispielsweise als Berstplatte (Einmalventil) ausgebildet ist.

Bei der in Figur 1 dargestellten Position des Überdruckventils 14 wird sichergestellt, dass der höchste im hochdruckseitigen Bereich 12 des Kältemittelkreislaufs auftretende Druck im Bereich des Überdruckventils 14 auftritt. Beim Betrieb des Kältekreislaufs 1 tritt nämlich der Maximaldruck unmittelbar nach dem Kompressor 2 auf. Im späteren Verlauf der Rohrleitung 3,. im Gaskühler 4 bzw. der dem Gaskühler 4 nachgeschalteten Rohrleitung 5 (dementsprechend auch in einem vorliegend nicht dargestellten inneren Wärmeübertrager) sind die auftretenden Drücke in Folge von Leitungsdruckabfällen niedriger.

In analoger Weise gilt dies auch für die Niederdruckseite 13 des Kältemittelkreislaufs. Hier befindet sich der höchste niederdruckseitig auftretende Druck unmittelbar hinter dem Expansionsorgan 6. Aufgrund von Leitungsverlusten nimmt der Druck im Verlauf der Rohrleitung 7, des Verdampfers 8, der Rohrleitung 11, des Kältemittelakkumulators 9 sowie der Saugleitung 10 zum Kompressor 2 stetig ab. Dementsprechend ist das niederdruckseitige Überdruckventil 16 unmittelbar nach dem Expansionsorgan 6 angeordnet. Ähnlich zum hochdruckseitigen Überdruckventil 14 bläst auch das niederdruckseitige Überdruckventil 16 das freigegebene Kältemittel über eine Rohrleitung 17 ins Freie ab, so dass es zu keiner kritischen Konzentrationserhöhung an Kältemittel im Fahrzeuginnenraum kommt.

Beim Betrieb des Kältemittelkreislaufs 1 kommt es nach einer gewissen Betriebsdauer zu einer Kältemitielansammlung 18 im Akkumulator 9. Weiterhin sind im Falle von R744 (CO₂) als Kühlmittel die thermodynamischen Eigenschaften des Kältemittels derart, dass es bei in der Realität vorkommenden Umgebungsbedingungen passieren kann, dass die Umgebungstemperatur oberhalb der kritischen Temperatur des Kältemittels liegt. Nach einem Abschalten des Kältemittelkreislaufs 1 kann sich daher die Anlage auf Temperaturen erhitzen, bei denen das zunächst noch teilweise flüssig vorliegende Kältemittel vollständig verdampft. Dadurch kommt es zu einer erheblichen Druckerhöhung (bis zum Stillstandsdruck) im Kältekreislauf. Wenn sich darüber hinaus Expansionsventil 6 und Kompressor 2 in einem Zustand befinden, in dem sie im Wesentlichen kein Kältemittel passieren lassen, so verteilt sich das durch Verdampfen frei werdende gasförmige Kältemittel im Wesentlichen nur auf den niederdruckseitigen Teil 13 des Kältemittelkreislaufs 1. Dies hat einen entsprechenden zusätzlichen Druckanstieg zur Folge. Um eine Beschädigung von Anlagenteilen bzw. ein unkontrolliertes Bersten der Anlage auch unter ungünstigsten Umständen zu vermeiden, ist es daher insbesondere bei der Verwendung von Kohlendioxyd als Kältemittel erforderlich, auch auf der Niederdruckseite 13 des Kältemittelkreislaufs 1 ein Überdruckventil 16 vorzusehen.

Im in Figur 1 dargestellten Ausführungsbeispiel ist das Überdruckventil 16 als separates Überdruckventil 16 vorgesehen. Seine Position bestimmt sich dabei durch die vorab erläuterten Überlegungen

In Figur 2 ist ein Expansionsorgan 18 mit integriertem Überdruckventil 23 dargestellt. Im Gehäuse des integrierten Druckablass-Expansionsventils 18 sind im gestrichelt angedeuteten Strömungskanal 25, von der Hochdruckseite 19 in Richtung der Niederdruckseite 20 gesehen, ein Expansionsventil 24 und im direkten Anschluss daran ein Überdruckventil 23 vorgesehen. Das kombinierte Ventil 18 weist an seinen beiden Enden jeweils einen Flansch 21, 22 zur Verbindung mit Druckleitungen des Kältekreislaufs auf. Durch die integrierte Ausführung von Expansionsventil 24 und Überdruckventil 23 kann einerseits eine unmittelbare Nachbarschaft der beiden Teile zueinander sichergestellt werden. Darüber hinaus werden zusätzliche Verbindungen zwischen Expansionsventil 24 und niederdruckseitigem Sicherheitsventil 23 vermieden, was einerseits den verbleibenden Kältemittelverlust verringert, andererseits aber auch Montageaufwand reduziert. Möglich ist es selbstverständlich auch, das Überdruckventil 23 im Bereich eines Anschlussflansches 22 vorzusehen.

In Figur 3 ist als weiteres Ausführungsbeispiel eine als 4-Port-Vorrichtung 26 ausgebildete Expansionsvorrichtung 26 dargestellt, bei der das Expansionsventil 24 in einem ersten Strömungskanal 27 liegt und in letzterem ein Überdruckventil 23 vorgesehen ist. Der erste Strömungskanal 27 ist beispielsweise zwischen die vom Gaskühler 4 kommende Leitung 5 und die zum Verdampfer 8 führende Leitung 7 eingeschleift. Darüber hinaus weist die 4-Port-Vorrichtung 26 einen zweiten Strömungskanal 28 auf, welcher beispielsweise in die Leitung 11, welche vom Verdampfer 8 zum Kältemittelakkumulator 9 führt, eingeschleift ist.

Anders als bei bekannten 4-Port-Expansionsventilen bei R134a-Kältemittelkreisläufen geht vom zweiten Strömungskanal 28 keinerlei Rückkopplung auf das im ersten Strömungskanal 27 angeordnete Expansionsventil 24 aus. Insbesondere ist kein Temperaturfühler bzw. keine (Differenz-)Druckregelung vorgesehen.

Die 4-Port-Ausführung 26 im Sinne von Figur 3 ist jedoch auch bei R744 von Vorteil, da es beispielsweise möglich ist, entsprechend ausgebildete Doppelrohrleitungen an den jeweiligen Flanschen des 4-Port-Organs 26 mit einem einzigen Befestigungsvorgang zu verbinden. Auch ist es möglich, dass das 4-Port-Organ 26 an einer Seite integral mit einem Verdampfer ausgebildet wird. Dann ist es möglich, durch einen einzigen Montageschritt den Verdampfer 8 über die beiden verbleibenden Flansche 29, 30 mit einer geeignet ausgebildeten Doppelrohrleitung zu verbinden. Dadurch kann die Montage des Kältemittelkreislaufs deutlich vereinfacht werden.

## Patentansprüche

1. Expansionsvorrichtung (6, 18, 22) für einen Kältemittelkreislauf (1) mit wenigstens einem Expansionsorgan (6, 24),
**gekennzeichnet durch**
zumindest eine integrierte Überdrucksicherheitsvorrichtung (16, 23).

2. Expansionsvorrichtung nach Anspruch 1,
**dadurch gekennzeichnet, dass**
zumindest eine Überdrucksicherheitsvorrichtung (16, 23) niederdruckseitig (13) angeordnet ist, und bevorzugt mit zumindest einem Austrittskanal (25, 27) des Expansionsorgans (24) in Verbindung steht.

3. Expansionsvorrichtung nach Anspruch 1 oder 2, **gekennzeichnet durch** eine Gehäusung (26) mit vier Anschlüssen.

4. Expansionsvorrichtung nach einem der vorangehenden Ansprüche, bei der zumindest eine Überdrucksicherheitsvorrichtung (16, 23) als Einmaldruckablasseinrichtung, insbesondere als Berstplatte ausgebildet ist.

5. Expansionsvorrichtung nach einem der vorangehenden Ansprüche, bei der zumindest eine Überdrucksicherheitsvorrichtung (16, 23) als Mehrfachdruckablasseinrichtung, insbesondere als federbelastete Ventileinrichtung ausgebildet ist.

6. Expansionsvorrichtung nach einem der vorangehenden Ansprüche, **gekennzeichnet durch** zumindest eine Gasableiteinrichtung (17) zur Ableitung der von der Überdrucksicherheitsvorrichtung (16) freigesetzten Gase ins Freie.

7. Expansionsvorrichtung nach Anspruch 6, bei der zumindest eine Gasableiteinrichtung (17) als Rohreinrichtung ausgebildet ist.

8. Verdampfervorrichtung (8) für einen Kältemittelkreislauf, **gekennzeichnet durch** zumindest eine integrierte Überdrucksicherheitsvorrichtung (16).

9. Verdampfervorrichtung nach Anspruch 8, bei der zumindest eine Überdrucksicherheitsvorrichtung (16) im Bereich der Kältemittelzuführung (7) der Verdampfervorrichtung (8) angeordnet ist.

10. Verdampfervorrichtung nach Anspruch 8 oder 9, aufweisend zumindest ein die Zuführleitung (7) und die Abführleitung (11) umfassendes Anschlusselement (26), welches zumindest eine Überdrucksicherheitsvorrichtung (23) und/oder eine Expansionsvorrichtung (24) aufweist.

11. Verdampfervorrichtung nach einem der Ansprüche 8 bis 10, bei der zumindest eine Überdrucksicherheitsvorrichtung (16, 23) als Einmaldruckablasseinrichtung, insbesondere als Berstplatte ausgebildet ist.

12. Verdampfervorrichtung nach einem der Ansprüche 8 bis 11, bei der zumindest eine Überdrucksicherheitsvorrichtung (16, 23) als Mehrfachdruckablasseinrichtung, insbesondere als federbelastete Ventileinrichtung ausgebildet ist.

13. Verdampfervorrichtung nach einem der Ansprüche 8 bis 12, **gekennzeichnet durch** zumindest eine Gasableiteinrichtung (17) zur Ableitung der von der Überdrucksicherheitsvorrichtung (16, 23) freigesetzten Gase ins Freie.

14. Verdampfervorrichtung nach Anspruch 13, bei der zumindest eine Gasableiteinrichtung (17) als Rohreinrichtung ausgebildet ist.

15. Kältemittelkreislaufanordnung (1), aufweisend wenigstens eine Verdampfervorrichtung (8) und wenigstens eine Expansionsvorrichtung (6) mit wenigstens einem Expansionsorgan,
**gekennzeichnet durch**
wenigstens eine zwischen Expansionsorgan (6) und Verdampfervorrichtung (8) angeordnete Überdrucksicherheitsvorrichtung (16).

16. Kältemittelkreislaufanordnung nach Anspruch 15 mit zumindest einer Expansionsvorrichtung (16, 18, 26) gemäß einem der Ansprüche 1 bis 7.

17. Kältemittelkreislaufanordnung nach Anspruch 15 oder 16,
**gekennzeichnet durch**
zumindest eine Verdampfervorrichtung (8) nach einem der Ansprüche 8 bis 14.

18. Kältemittelkreislaufanordnung nach einem der Ansprüche 15 bis 17,
**gekennzeichnet durch**
zumindest eine benachbart zum Expansionsorgan (6) angeordnete Überdrucksicherheitsvorrichtung (16).

19. Kältemittelkreislaufanordnung nach einem der Ansprüche 15 bis 18,
**gekennzeichnet durch**
zumindest eine separat ausgebildete Überdrucksicherheitsvorrichtung (16).

20. Kältemittelkreislaufanordnung nach Anspruch 19, bei der die separat ausgebildete Überdrucksicherheitsvorrichtung (16) als Rohrleitungsabschnitt (7) dient.

21. Kältemittelkreislaufanordnung nach Anspruch 19 oder 20, bei der zumindest eine separate Überdrucksicherheitsvorrichtung (16, 23) als Einmaldruckablassreinrichtung, insbesondere als Berstplatte ausgebildet ist.

22. Kältemittelkreislaufanordnung nach einem der Ansprüche 19 bis 21, bei der zumindest eine separate Überdrucksicherheitsvorrichtung (16, 23) als Mehrfachdruckablassvorrichtung, insbesondere als federbelastete Ventileinrichtung ausgebildet ist.

23. Kältemittelkreislaufanordnung nach einem der Ansprüche 19 bis 22, bei der zumindest eine separate Überdrucksicherheitsvorrichtung (16) wenigstens eine Gasableiteinrichtung (17) zur Ableitung der von der Überdrucksicherheitsvorrichtung freigesetzten Gase aufweist, welche insbesondere als Rohreinrichtung ausgebildet ist.

24. Kältemittelanlage mit einer Expansionsvorrichtung und/oder einer Verdampfer-Vorrichtung und/oder einer Kreislaufanordnung (1) nach einem der Ansprüche 1 bis 23, bei der R744 als Kältemittel verwendet wird.
